# EUROPEAN PATENT APPLICATION

(11) **EP 4 195 440 A1**
(43) Date of publication of application: **14.06.2023**
(21) Application number: 21213164.3
(22) Date of filing: 08.12.2021
(51) Int. Cl.: H02J 3/32, H02J 3/38, H01M 10/42

(54) **ENERGY DISTRIBUTION SYSTEM AND METHOD OF CONTROLLING THE DISTRIBUTION OF ENERGY**

(71) Applicant: ABB SCHWEIZ AG, 5400 Baden (CH)
(72) Inventor: Sowa, Kacper, 33-342 Barcice (PL); Oramus, Piotr, 31-035 Krakow (PL); Kuczek, Tomasz, 31-589 Krakow (PL); Bontempelli, Andrea, 10025 Pino Torinese (IT)
(74) Representative: AOMB Polska Sp. z.o.o.

(57) **Abstract**

An energy distribution system comprising a main controller unit, a plurality of battery energy storage systems detachable connectable to a power electric grid, each comprising at least one or more of a battery module, a selF-control module For preforming operations and maintenance procedures, and a power conversion module, said plurality of battery energy storage systems (BESS) operating as one or more distributed energy storage units, wherein said distributed energy storage units are communicatively connected to each other respectively and communicatively connected to the main controller unit. Each of the distributed energy storage unit is configured For exchanging data related to current and historical state of every distributed energy storage unit with each other and with the main controller unit. The main controller unit is configured For connecting and disconnecting said distributed energy storage units. Each of said selF-control modules of plurality of said distributed energy storage units Further comprises an artificial intelligence maintenance algorithm configured For fault prediction, wherein the artificial intelligence maintenance algorithm is adaptable by machine learning process using historical fault data acquired From the distributed energy storage unit itself and data received From others distributed energy storage units of said one or more groups.

The invention also relates to a method For batteries lifetime protection in a distributed energy storage system.

## Description

### Field of the invention

The present disclosure relates in general to distributed energy storage systems. More specifically, the present invention relates to an energy distribution system and a method of controlling the distribution of energy.

### Background

The development of power distribution systems in comparison with dynamically increasing number of high power loads (e.g. electric vehicle chargers - EVCs), consuming high level of the energy in relatively short periods of a time, requires from a grid operator to modernize (oversize) the power line or this task is switched to a potential user, where solution is to employ devices supporting the power line operation, in order to meet the operator's connection requirements.

In the case of such devices characterized by intermittent operation, where the operating time of a device in relation to the idle time is relatively short (one day time scale), the feeder line, switchgear, transformer, and other devices must be dimensioned for the peak loads, which increase the cost of installation due to oversized components. Therefore, to ensure the correct operating conditions for other devices supplied from the same line, the fault level of the network at the Point of Common Coupling - PCC is sufficiently high.

Solution to the above issue is employment of battery energy storage systems (BESS) based on Li-Ion batteries. The devices are responsible for local grid balancing, ensuring the correct operating conditions in PCC by injecting of power into system to avoid exceeding power grid limits.

Current market ongoing focus is heading towards e-mobility. Specific for electrical vehicle charging inFrastructure with energy storage modules gains market attention to provide the needed peaking capacity as well as back-up power for electric vehicle charging. Charging solutions comprised of electric-vehicles, high power chargers and BESS provide significant support to the grid. Several applications for BESS can be found in the state of the art such as load leveling, load shifting, peak shaving and spinning reserve beyond others.

A similar issue is also occurring in shipboard microgrids, where more generators are kept online, operating far below their efficient point in order to compensate for the fluctuations caused by high dynamic loads and increase the reliability of the system.

Charging stations are connected to an electrical network and may also comprise an electrical storage system, which has a battery as electric storage as well as other means of energy (i.e., renewables). Hence, additional function of BESS could be related to compensation of power fluctuations caused by wind or solar energy generation. An economical aspect can be also considered - BESS could inject power to grid when price of kWh is highest and charge itself when price of kWh is lowest.

However, the primary purpose of the electrical storage system is to be a back-up in case the electrical network goes down and to provide charging power to the electrical vehicles in addition to the power obtained from the network.

Increasing lifespan of BESS, BESS operation in microgrid, and economical issues on BESS maintenance are known in the prior art.

Document US9954368B2 discloses a battery energy storage system (BESS) management device and method for managing a BESS. The BESS is used for receiving and charging electrical energy and supplying the electrical energy to a DC/AC converter by discharging the charged electrical energy in a power supply system. The BESS management device includes a measurement unit configured to measure state of charges (SOCs) of a plurality of series-connected modules or cells in the BESS and a DC power supply unit configured to supply DC power to one of the plurality of modules or one of the plurality of cells on the basis of the SOCs of the plurality of modules or cells.

Document WO2017062919A1 discloses an electrical energy storage system including a battery configured to store and discharge electric power to an energy grid, a power inverter configured to use battery power setpoints to control an amount of the electric power stored or discharged from the battery, the battery power setpoints comprising at least one of frequency regulation power setpoints and ramp rate control power setpoints, and a controller. The controller is configured to use a battery life model to generate the battery power setpoints for the power inverter. The battery life model includes one or more variables that depend on the battery power setpoints.

Document US7570015B2 discloses a method and system in which a charging process for rechargeable batteries is controlled in accordance with selected predetermined variable conditions. In an exemplary embodiment, a user is enabled to select the predetermined conditions under which the charging of a battery is suspended until such conditions have changed. Such conditions include, for example, physical location of the battery being charged and/or the time and/or date when the battery is being charged. A user GUI is provided to enable a user to input selected times and/or dates and/or locations when the device containing the battery is likely to be away from a charging source and needs to be fully charged, and/or selected times and/or dates and/or locations when the device is likely to have access to a power source and the battery is enabled to be charged only to a storage level.

### Summary

### Technical problem

Modern distribution systems, especially grids with high renewable penetration, require additional energy storage capability in order to reduce frequency and active power fluctuations and exceeding voltage limits. Another issue in such system is continuously growing number of high-power loads. The perfect example of such loads is Electric Vehicle Chargers (EVC).

Ratings of EVC chargers are significantly growing, as well as their impact on quality of the grid operation. During high loads permitted voltage drop limits can be exceeded, especially in the grids characterized with low short circuit power (so called weak grids).

Such type of loads operates with power close to even 350 kW (in case of commercial vehicles) for relatively short period of a time. Charging power is not constant over time. For example, in case of Porsche Taycan it changes from minimum to 80%, and it takes around 23 min, however high power equal to 270 kW is used only for approximately 10 min. Charging from 80% to 100% takes another hour and power is lower than 50 kW during this period.

Charging load profiles are not known in advance and depend on several random factors e.g., car type (batteries) manufactures, initial value of the SoC (State of Charge), amount of time reserved for single charging session, interrupted charging, power sharing between chargers etc. Hence, preventive oversizing of the components is currently considered as a primary solution to abovementioned issues. Another solution for this issue can be employment of BESS (Battery Energy Storage System), which becomes more and more popular, due to lithium-ion batteries (Li-Ion) continuously price drops pushed from the electric car industry. However, Li-Ion batteries have a limited lifetime which is non-fixed and related not only to battery chemistry and specifications, but also to operation and storage conditions.

It is therefore objective of the present invention to provide a solution which takes into account the above-mentioned drawbacks. Another objective is to provide an energy distribution system and a method of energy distribution suitable for long lifetime installation, e.g., for electric vehicle charging stations by decreasing cost of installation, especially in long-time perspective, due to lifetime extension of used batteries.

### Solution to the Problem

The above-mentioned objectives have been achieved by the invention set out in the appended set of claims, wherein independent claim 1 refers to an energy distribution system and independent claim 6 refers to a method of controlling the distribution of energy.

The present invention is dedicated to energy distribution systems supplying power to loads e.g. Electric Vehicle Chargers (EVC), cooperating with Battery Energy Storage Systems (BESS), and optional renewables - i.e., photovoltaic panels array (PV) or wind power plant.

The idea presented in this invention provides for optimal utilization of Li-Ion batteries in BESS structure, which extends its lifetime, thanks to internal communication in the system based on AI prediction and analysis of historical data collected on the system. The system includes more than one BESS operating as one or more of distributed energy storage units which **h**ave possibility to communicate between each other. In addition, the BESS has information on how much power must be delivered by units locally (APM - Active Power Measurement in 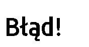 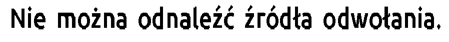 2), as well as globally at PCC (Point of Common Coupling). It should be noted that due to BESSs internal communication the system will provide optimal utilization of energy storage capabilities in the grid and mitigate all adverse effects generated by nature of renewables. Furthermore, the developed method enables a flexible approach to the requirements concerning the rated power at the point at which the periodically operating loads with a high peak current value (apparent power) are connected.

The role of the BESS in the system is to support the operation of the loads, in particular EVC's, especially when the demand of charging power exceeds maximum limit of the grid (peak shaving). In such case, BESS supports the operation of the grid. On the contrary, when there is no or little demand for power, or as in case of EVCs there are no vehicles to be charged, - BESS should start charging itself.

### Advantageous effects

- Prediction of load profiles and better optimization of energy distribution;
- Optimal usage of batteries from battery lifetime perspective;
- Oversizing of grid connection is not required due to predictive energy storage - hence, initial installation cost is reduced;
- Energy cost optimization (when price during a day is high BESS support operation of the loads (e.g., EVCs), on the contrary BESS will start charging itself);
- Communicatively connected BESSs protect lifetime of batteries;
- Power flow is balanced and spread between BESS units, hence the system stability is increased;
- Improved energy quality (redundancy of BESS allows to avoid breaks in supplying);
- AI control provide better utilization of all system - typical operation of BESS is additionally boosted by prediction of operation intervals - charging and discharging sessions.

### Brief description of Drawings

The method and the system of the present disclosure will now be described in more details with reference to the accompanying drawings in which:
Fig. 1 shows a schematic diagram of an energy distribution system with a control signals flow in the system according to one exemplary embodiment of the invention.
Fig. 2 Schematic diagram of a microgrid with BESSs with APM (local available Active Power Measurement).

### Detailed Description

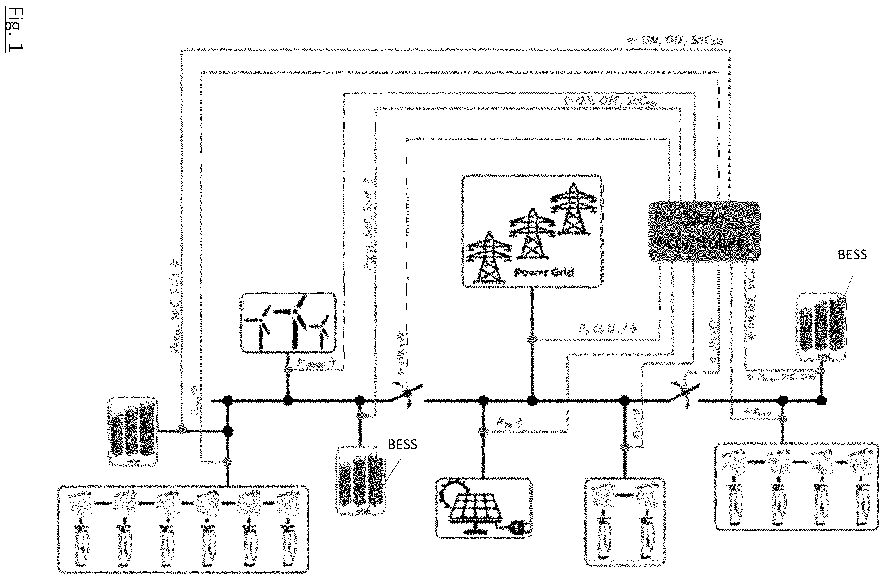

Referring to Fig. 1, there is provided an energy distribution system including a plurality of battery energy storage systems (hereinafter referred to as BESS) detachable connected to a power electric grid. Each BESS comprises at least one or more of a battery module, a self-control module, and a power conversion module detachably connected to a power electric grid. The battery module is preferable in a form of a battery pack comprising a plurality of batteries connected in series. A power conversion module includes an inverter configured to convert DC to AC. The self-control module may be any microprocessor device including at least a processor and a memory storing instructions executed by the processor for preforming operations and maintenance procedures in BESS.

Said plurality of BESSs operate or form one or more groups of distributed energy storage units.

The distributed energy storage units are communicatively connected to each other respectively and communicatively connected to a main controller unit configured for connecting and disconnecting said distributed energy storage units.

Each of the distributed energy storage units is configured for exchanging data related to the current and historical state of every distributed energy storage unit with each other and with the main controller unit.

Each of said self-control modules of plurality of said distributed energy storage units further comprises an artificial intelligence maintenance algorithm configured for fault prediction. The artificial intelligence maintenance algorithm is adaptable by machine learning process using historical fault data acquired from the distributed energy storage unit itself and data received from others distributed energy storage units.

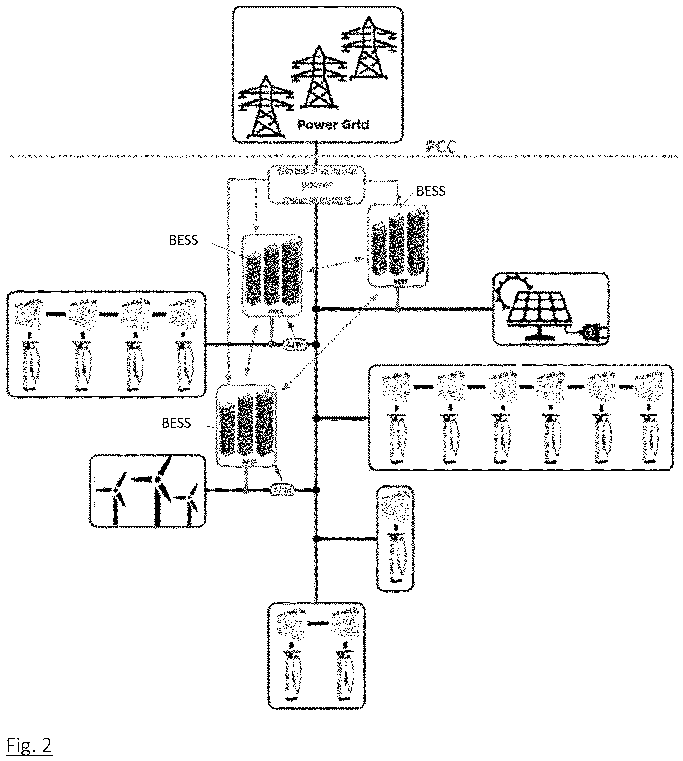

Fig. 2 shows a practical implementation of the above system in a local microgrid in which cooperation of BESSs with other devices, for example wind turbines, photovoltaic panels or EVCs chargers, is controlled by a method according to the invention.

The machine learning implemented as one of possible artificial intelligence algorithms predicts what the load profiles are expected and acts over the main controller unit providing inputs to the main set points of the BESSs which are related to the lifetime, also known as state of health (SoH), state of charge (SoC), charging power and the times when the charging of the batteries have to take place.

In addition, the communication between BESS units and information about power available for the microgrid allows the active power sharing between each BESS, hence the operation of the devices can be modeled with more flexibility. Moreover, such approach could optimize distributed generation nature. This allows to charge BESS units with low SoC by units with high SoC if the level of their SoH allows this operation, even when there is insufficient amount of power in the grid. Those two or more units can operate in isolation.

The BESS units installed in the system have ability to communicate between each other, hence several advantages may be implemented:
∘ In case when one of BESS is discharged to minimum state of charge (SoC), another one can support operation of the grid - in such way charging of discharged BESS can be carried out with previously defined conditions. Dedicated operating condition of the BESS are as follow:
   ▪ SoC (State of Charge) maximum should be limited to minimum (predicted for each day) if load prediction suggests that BESS should be charged to e.g., 50% there is no need to charge it to higher value, which increase internal cells losses.
   ▪ BESS should be discharged to minimum SoC before charging.
   ▪ when SoC of BESS decreases below defined level (e.g., 40%) charging of the BESS will be possible each time when power from the grid will be available. This way battery could operate with lower (State of Health) SoH level and Depth of Discharge (DoD).
∘ By having information about amount of power that is required locally and how much power is required globally at PCC (Point of Common Coupling) BESSs could cooperate (power sharing), in order to provide correct operating conditions for all loads. However, more important aspect of the proposed energy distribution system is that several actions, which protect and increase lifetime of the Li-ion batteries could be perFormed:
   ▪ testing of State of Health (SoH) of the specific BESS required charging BESS to 100% and discharging to minimum according to energy throughput theory - in such case another BESS could take responsibility of tested BESS and replace it. The maintenance periods for performing such action can be predicted by Artificial Intelligence (Al) algorithm, e.g., Machine Learning (ML), and based on historical data analysis.
   ▪ if SoH conditions for one of the BESSs are exceeded, another one could support operation of the first one (e.g., first one start operate with lower power/ C-rate of switch into standby state).
   ▪ the system operation is more efficient due to BESS redundancy and predicted operation periods, an adverse effect of power fluctuation due to renewables presence can be mitigated.
   ▪ maximize BESS battery lifetime by means of an adequate charging strategy as well as power sharing (flow) between BESS units. The algorithm provides optimal utilization of BESS storage capabilities based on historical and statistic data of EVCs usage, load profiles in PCC and renewables forecasts.

The general diagram with control signals of the algorithm is shown in Fig. 1. The following characteristics can be pointed out:
1) The main controller acquires feedback signals from each unit and monitors the following quantities:
   a) from BESS units: actual State of Charge (SoC), State of Health (SoH) and active power;
   b) from renewables (PV and wind): active power;
   c) from EVC units: active power;
   d) from external power grid: actual active power, reactive power, frequency and voltage;
2) The algorithm of the main controller monitors above-mentioned quantities and provides control signals to each BESS unit:
   a) ON signal- meaning that the BESS unit is operational and can provide active power for load, e.g., charging of car batteries;
   b) OFF signal- meaning that the BESS unit is not operational due to low SoC;
   c) SoC_{REF} - reference state of charge for depleted BESS units - meaning that this particular BESS unit should charge itself to the State of Charge value defined by SoC_{REF.}
3) the algorithm can also send ON/OFF signals to coupling circuit breakers to provide redundancy in case of missing BESS at certain area of the grid under control.

According to preferred embodiment a method comprises the following steps:
a) Sending data related to current and historical state of a distributed energy storage unit to every other distributed energy storage unit within a group of distributed energy storage units and to a main controller unit;
b) Calculating a power stored in one or more of a battery module of each of said distributed energy storage unit using the received data;
c) Receiving information about amount of the power that is required locally by the distributed energy storage units and globally in the power electric grid;
d) Calculating the prediction of the power needed for faultless operation under specific load conditions using an artificial intelligence algorithm;
e) Electrically connecting one of more of the distributed energy storage units having enough energy stored in the battery module to perForm operations without fault under predicted load condition;
f) Electrically disconnecting one or more of the distributed energy storage units not having enough energy stored in the battery module to perForm operations without fault under predicted load condition;
g) Electrically disconnecting one or more of the distributed energy storage units for which maintenance procedures are necessary;
h) Sending the fault data acquired from the distributed energy storage units interconnected within the group to the main controller unit and adapting the artificial intelligence algorithm implemented in the main controller unit by a machine learning process using said data.

### Industrial applicability

Typical application of a system are microgrids or weak grids with presence of loads such as EVCs.

Another possible application of a method is increased reliability of data centers where BESS acts as UPS.

## Claims

1. An energy distribution system comprising
a main controller unit,
a plurality of battery energy storage systems detachable connectable to a power electric grid, each comprising at least one or more of a battery module, a self-control module for preforming operations and maintenance procedures, and a power conversion module, said plurality of battery energy storage systems (BESS) operating as one or more distributed energy storage units,
wherein said distributed energy storage units are communicatively connected to each other respectively and communicatively connected to the main controller unit, and
wherein each of the distributed energy storage unit is configured for exchanging data related to current and historical state of every distributed energy storage unit with each other and with the main controller unit, and
wherein the main controller unit is configured for connecting and disconnecting said distributed energy storage units,
**characterized in that** each of said self-control modules of plurality of said distributed energy storage units further comprises an artificial intelligence maintenance algorithm configured for fault prediction,
wherein the artificial intelligence maintenance algorithm is adaptable by machine learning process using historical fault data acquired from the distributed energy storage unit itself and data received from others distributed energy storage units of said one or more groups.

2. The system according to claim 1, **characterized in that** all the distributed energy storage units are detachably connected to the power electric grid with Point of Common Coupling.

3. The system according to claim 1 or 2, **characterized in that** the distributed energy storage units are detachably electrically connected to each other for power sharing between the distributed energy storage units withing the one or more groups.

4. The according to claim 1, 2 or 3, **characterized in that** the distributed energy storage units are detachably electrically connected to means of energy consumption, preferably electric vehicle charging stations.

5. The according to claim 1, 2, 3 or 4, **characterized in that** the distributed energy storage units are detachably electrically connected to means of renewal energy generation sources, preferably photovoltaics modules or wind turbines.

6. A method of controlling the distribution of energy within an energy distribution system according to preceding claims for batteries lifetime protection, comprising following steps:
a) Sending data related to current and historical state of a distributed energy storage unit to every other distributed energy storage unit within a group of distributed energy storage units and to a main controller unit;
b) Calculating a power stored in one or more of a battery module of each of said distributed energy storage unit using the received data;
c) Receiving information about amount of the power that is required locally by the distributed energy storage units and globally in the power electric grid;
d) Calculating the prediction of the power needed for faultless operation under specific load conditions using an artificial intelligence algorithm;
e) Electrically connecting one of more of the distributed energy storage units having enough energy stored in the battery module to perForm operations without fault under predicted load condition;
f) Electrically disconnecting one or more of the distributed energy storage units not having enough energy stored in the battery module to perForm operations without fault under predicted load condition;
g) Electrically disconnecting one or more of the distributed energy storage units for which maintenance procedures are necessary;
h) Sending the fault data acquired from the distributed energy storage units interconnected within the group to the main controller unit and adapting the artificial intelligence algorithm implemented in the main controller unit by a machine learning process using said data.

7. The method according to claim 6, **characterized in that** the data related to the current state of the distributed energy storage unit is a State of Charge (Soc), a State of Health (SoH) and a Depth of Discharge (DoD).

8. The according to claim 6 or 7, **characterized in that** the data related to the historical state of the distributed energy storage unit is a previous State of Charge (Soc), a State of Health (SoH), a Depth of Discharge (DoD), a maintenance procedure performed and a number of charge cycles.

9. The method according to claim 6, 7 or 8, **characterized in that it** further comprises an additional step of electrically connecting the at least two distributed energy storage units within the group for power sharing if the power in the grid necessary for preForming the maintenance procedure is insufficient.
